Europäisches Patentamt

European Patent Office

Office européen des brevets

(19)

(11) Publication number: **0 302 843**
**A2**

(12)

# EUROPEAN PATENT APPLICATION

(21) Application number: **88830338.5**

(22) Date of filing: **03.08.88**

(51) Int. Cl.⁴: **G 06 F 15/72**
**G 06 F 15/60**

(30) Priority: **05.08.87 IT 4827187**

(43) Date of publication of application:
**08.02.89 Bulletin 89/06**

(84) Designated Contracting States: **BE DE FR GB IT**

(71) Applicant: **Comitato Nazionale per la Ricerca e per lo Sviluppo dell'Energia Nucleare e delle Energie Alternative**
**Viale Regina Margherita 125**
**I-00198 Roma (IT)**

(72) Inventor: **Dall'Olio, Leandro**
**15 Via Arcangelo Corelli**
**I-40141 Bologna Bo (IT)**

**Fantin, Sergio**
**10 Via Franco Bolognese**
**I-40129 Bologna BO (IT)**

**Lesca, Luigi**
**14 Via Longhena**
**I-40139 Bologna Bo (IT)**

**Valentini, Mafalda**
**7 Via Fratelli Cervi**
**Castenaso I-40055 Bologna BO (IT)**

(74) Representative: **Bazzichelli, Alfredo et al**
**c/o Società Italiana Brevetti S.p.A. Piazza Poli 42**
**I-00187 Roma (IT)**

(54) Computer aided working station for the design and/or processing of sketches for articles of clothing.

(57) A computer aided working station is described for the design and/or processing of sketches for articles of clothing or the like, comprising an electronic processor associated to image files, means for optical storage of the images, image pick-up means, graphic composition means and other parts enabling new image configurations to be combined using file elements and combining them fully or in part.

FIG 1

EP 0 302 843 A2

Bundesdruckerei Berlin

**Description**

## COMPUTER AIDED WORKING STATION FOR THE DESIGN AND/OR PROCESSING OF SKETCHES FOR ARTICLES OF CLOTHING

The present invention relates to a computer aided working station for the design and/or processing of sketches for articles of clothing and the like.

In recent years, with the increase of electronic processor performance and the decrease in cost of both the central units and the peripheral units and in particular with the development of personal computers, so-called CAD (Computer Aided Design) working stations have been created with immediate advantage to industry, in the widest possible number of fields, such as mechanical design, architectural design, electronic design, simulation of apparatus, etc.

Working stations of the above mentioned kind, suitable for use by stylists for the creation and/or processing of sketches for articles of clothing, have so far simply consisted in a simple alphanumerical data base of descriptions and references associated to a graphic software.

Working stations and packages of software are also known, which use video disk files of images, usually dedicated, with sometimes fixed and sometimes moving images, in the teaching field, touristic field, etc.

The main object of the present invention is to provide a working station which combines a plurality of sketches, photograms, historical images on video disk and a plurality of descriptions and references consisting of alphanumerical data, so as to form a working station of the above mentioned type, physically discrete, but logically integrated, which can be interrogated according to different keys or search criteria, and enabling all the above mentioned graphic elements to be assembled to form new image configurations, which can be automatically or manually classified, thus increasing the available data base which is part of the system.

Further objects and features will be disclosed hereinafter, referring to the following description and the accompanying drawings.

It should be noted that reference is made to specific apparatuses in the drawings and their respective description. It has to be understood that such specific apparatuses are identified only for an exemplificative purpose and one skilled in this art could fully or in part substitute such apparatuses with others equivalent without falling out of the scope of the invention.

In the drawings:

figure 1 shows a configuration of the working station according to the present invention;

figure 2 shows the logic configuration or software architecture of the working station shown in figure 1; and

figure 3 shows the generic working logic configuration of the working station according to the invention.

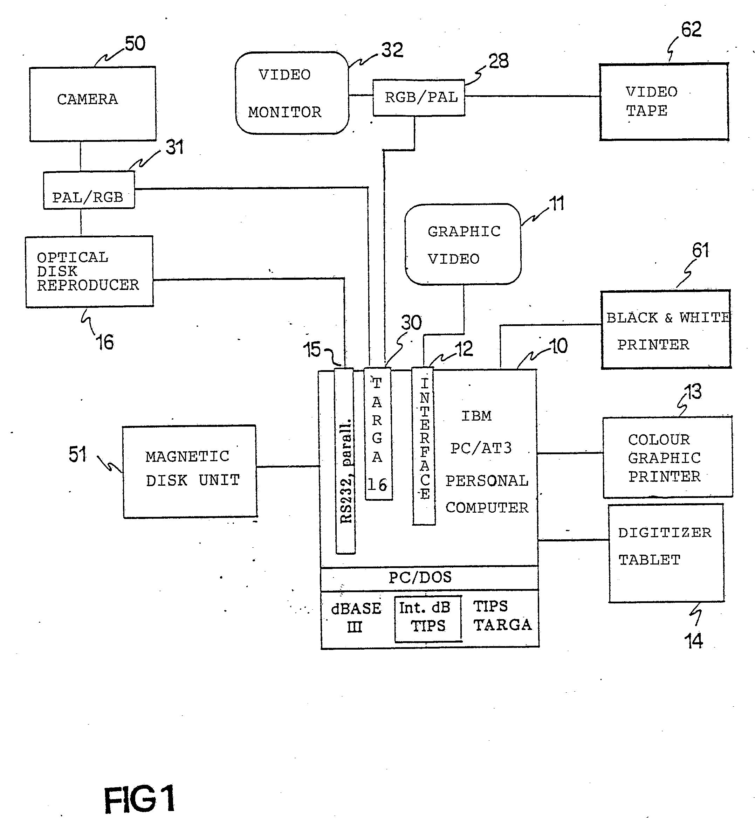

With reference to the drawings and particularly to figure 1, the working station according to the invention is based on a personal computer IBM PC/AT3 generically indicated in 10, associated to a graphic video indicated in 11 interfaced to the computer 10 by means of an interface 12.

Also associated to the computer 10 is a colour graphic printer 13, an eventual black and white printer 61, and a digitizer tablet 14. The computer 10 is provided with a graphic colour card 30 of the type "TARGA 16" cooperating through a PAL/RGB decodifier 31 with an optical disk reproducer 16 and with a high resolution PAL video monitor 32 through an RGB/PAL codifier 28.

The decodifier 31 also connects a PAL camera 50 to the TARGA 16 card 30.

A video tape 62 is also connected to the codifier 28.

An external extractable high capacity magnetic disk unit 51 completes the configuration.

The optical disk reader-reproducer 16 is connected to the computer 10 through an RS232 interface 15.

Residing in the computer are an operating system "PC/DOS", an alphanumerical file management package "dBASE III", a graphic package "TIPS" and an interface package between these two latter.

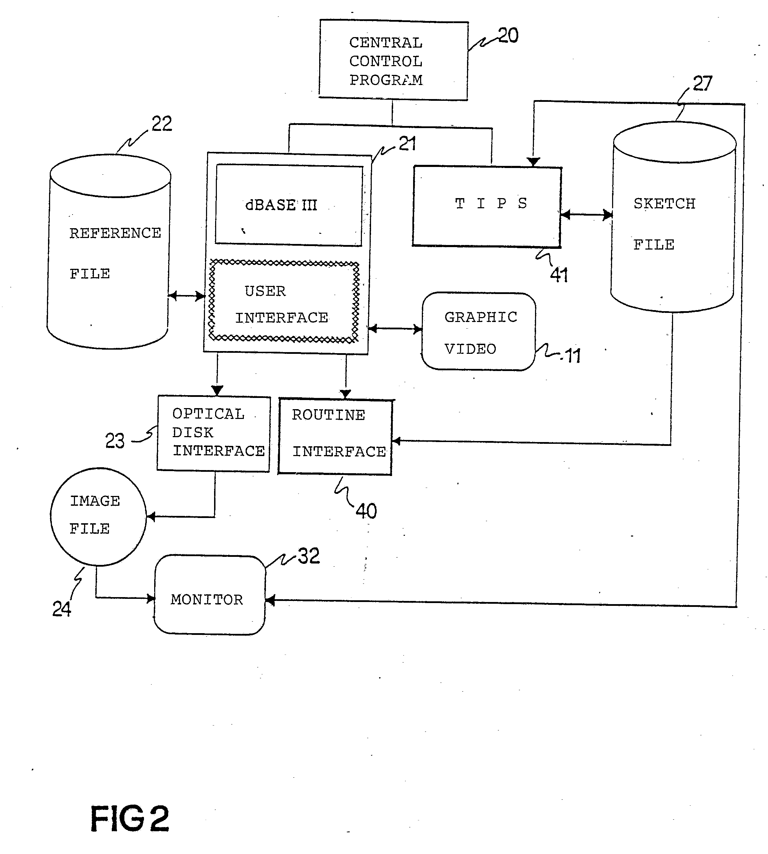

In figure 2 the software architecture of the working station of figure 1 is shown. This comprises a central control program 20 managing the subroutine "dBASE III" and the user interface for the references indicated in block 21, this program being bidirectionally associated to a reference file 22, an interface to the optical disk reader 23, coupled to an image file on video disk 24 connected to a colour television monitor 32.

The control program 20 is also connected to the TIPS graphic package indicated in block 41, which interacts with the sketch file 27 and the colour television monitor 32. The video 11 is obviously also associated to block 21.

Block 40 of the interface routine between TARGA and dBASE III interacts between block 21 and the sketch file 27.

In the foregoing the working station according to the present invention has been described in terms of an orderly association of elemental blocks identified with reference numerals or the specific commercial denominations of hardware and software elements contained in the aforementioned elemental blocks.

The main operating features of the system according to the invention are described in the following, bearing in mind the foregoing description with reference to the accompanying drawings.

The working station of the invention specifically provides the functions of:

a) enabling the stylist to design sketches by graphic tablet and to store same on magnetic disk in the form of an image;

b) providing an automatic connection between the set of sketches or sketch images, the historical file on video disk and the reference alphanumerical data base, thus enabling the images to be displayed on a video screen, starting from only one set of alphanumerical information;

c) accepting images as an input from a camera (photograms) and storing same on a magnetic disk in the form of sketch image;

d) enabling historical images, sketches, photograms and eventual written texts to be mixed for forming new sketch images;

e) enabling images to be transmitted to a video recorder: the video tape so obtained can be useful also for the construction of the master-tape for the print of a successive video disk.

The previously illustrated components are summarized in the following list:
- hardware:
- IBM PC/AT3 with 640 KB RAM, 30 MB hard disk, one 1200 KB floppy disk, two RS232 interfaces, one printer interface, one video,
- SUMMAGRAPHICS type digitiser tablet,
- IBM 3852 type colour graphic printer,
- PAL composite/RGB decodifier and codifier and vice versa,
- PHILIPS LASERVISION VP835/00B type analogic optical disk reader,
- PAL camera,
- PAL monitor,
- video tape,
- TARGA 16 PAL graphic board inserted into PC,
- Bernoulli - Box type external magnetic disk unit, software:
- PC/DOS 3.1 operating system,
- DBMS dBASE III produced by Ashton-Tate,
- TIPS for TARGA 16 produced by AT&T,
- interface routine between dBASE III and TARGA 16, produced by Sigraph, Milan, Italy,
- interface for the drive of the optical disk reader,
- user interface and control program,
- file structure of the references to the historical images, sketches and sketch images,
- file of the historical images on optical disk,
- file of the sketches and sketch images (this is initially an empty group which is filled during use).

In the following some essential components are described with reference to the drawings:

TARGA TIPS

It solves all the typically graphic points of the problem. It consists of only one board to be inserted into the PC (TARGA 16), which provides 32,768 colours simultaneously displayable on the screen. The TARGA 16 board accepts as an input a PAL RGB signal (i.e. broken up into the three basic colours), such as a signal transmitted from a camera or the LASERVISION optical disk unit provided with, where necessary, a suitable decodifier from composit signal to RGB and provides an output which can be transmitted to a television monitor and/or a video recorder through a composite RGB/video codifier.

The TIPS software package, associated to the TARGA board, enables the images to be designed, stored and edited with modification of their shapes, sizes and colours, and moreover provides the zoom of images and the rotation and cut of image portions, etc.

The connection of the sketch images produced by TIPS and the alphanumerical information managed by dBASE III can be effected by means of a routine assembly, which can be recalled from the dBASE III, which interfaces the TARGA board directly.

Optical disk

This is of analogic type and is the support for storing a high number of images (about 54,000 per side). The image storing procedure is considerably complex (taking up of each single image, transferring from film to AMPEX tape, masterisation, and finally printing from a matrix of each single disk). It is used to contain the file of historical images.

Interface for the drive of the optical disk reader

This makes it possible, through RS232 interface, to transmit commands to the reading unit of the optical disk, and to receive and interpret the response signals coming therefrom.

It can be recalled by the user interface.

User interface and control program

They have been written by using the interpreter language available on dBASE III.

They provide a "menu driven" interface to the user and allow the management of the file for the references to the historical images, sketches and sketch images, as well as the drive for the video disk reader (see the preceding paragraph) and the connection with the interface routine between dBASE III and TARGA 16.

They provide in particular:
- insertion of new alphanumerical information, comprising descriptions of fashion themes, references to historical images, references to sketches and sketch images, etc.;
- modification and cancellation of one or more items of the above information;
- searching, according to various keys, among the above alphanumerical information;
- searching of historical images, sketches and sketch images by the same modes, by displaying them on the PAL video;
- printing of the alphanumerical information;
- digitisation of the historical images and the photograms, thus transforming these into sketch images, with automatic insertion of their features into the reference file;
- recalling of TIPS;
- carrying out of service programs comprising saving or restoring files, resetting the reference files, etc.;

From the strictly operative point of view, the following operations shall be carried out for the assembly of the working station of the invention:

A. obtaining the above mentioned hardware apparatuses;

B. making the connections of the various hardware components so as to form (together with the software) a complete and autonomous working station (informatic system). The hardware connections to be made are as follows:

a) the TARGA board has to be inserted into the PC/AT3;

b) the digitising graphic tablet has to be connected to a serial gate of PC/AT3;

c) the colour printer has to be connected to the first parallel gate of PC/AT3;

d) the optical disk reader has to be connected, through its serial gate, to the serial gate still free of PC/AT3. Such connection serves the purpose of carrying the computer commands to the video disk reader as well as the responses therefrom;

e) the composite/RGB PAL decodifier has to be connected to the input gate of the TARGA board;

f) the optical disk reader has to be connected, through its composite output PAL gate to the input gate of the decodifier. Thus the historical images output from the video disk reader in composite PAL standard are transmitted, through decodifier, to the TARGA board, where they are digitised;

g) the PAL camera has to be connected to the second input of the decodifier. The photograms consequently follow the same path as the historical images;

h) the composit RGB/PAL codifier has to be connected to the output gate of the TARGA board;

i) the PAL monitor has to be connected to the composite RGB/PAL codifier. In the case a RGB (PAL) monitor is available it can be directly connected to the output gate of the TARGA board, thus skipping the codifier. The complete path of the images is as follows: optical disk reader (or camera), decodifier, TARGA board, computer, TARGA board, codifier, PAL monitor (or video tape);

j) the video tape (not absolutely necessary for the operation of the working station) can be connected to the second output of the codifier;

k) the external magnetic disk unit has to be connected to PC/AT3 through an internal board being part of the BERNOULLI-BOX system;

C. obtaining the previously mentioned software, restrictively to the already commercially available packages (PC/DOS 3.1, dBASE III, TIPS, routine between dBASE III and TARGA board);

D. preparing the historical file on video disk from the original images on paper and using standard industrial procedures;

E. designing the alphanumerical reference file and build ing its structure on magnetic disk by using the dBASE III;

F. writing an interface program between the dBASE III, the video disk reader and the TARGA graphic board. Such program can be recalled from dBASE III environment and enables the user to "drive" the video disk, skipping from one historical image to the logically successive (or preceding) one, i.e. to an image classified in the reference bank with identical characteristics, but which can be physically found in any position on the video disk. Such program, moreover, enables the historical images to be "captured" by recalling the interface routines with the TARGA board, to be digitised and transformed into sketch images. The program morever sets the information necessary for dBASE III to automatically classify in the reference file the new sketch images produced in this phase;

G. writing a program in dBASE III, by using the interface routine with TARGA board, which, after having initiated such routine, recalls the picture software TIPS;

H. writing, by using the dBASE III language, a plurality of programs, which form the interface to the user and the control program. Such programs recall the interface program by the video disk reader and use the information set therein for the automatic classification of the new sketch images (see preceding paragraph F).

Such programs moreover carry out all the necessary recalls to the interface routines with the TARGA board, so that the user can recall on the screen a sketch or a sketch image starting from the description of the characteristics of the image itself.

Similar recalls to the same interface routines with the TARGA board, moreover, enable the user to display photograms from a camera.

In the following an example of a styling problem will be illustrated to be resolved with the aid of the working station according to the present invention.

Definition of the problem

A fashion stylist in the clothing field feels that women's fashion in the next season will involve dresses in a Spanish style and he wishes to design a new model of jacket. To this end he must search for historical images of women's jackets used in the past inspired by the same theme (Spain); then, by combining elements taken from said images and new elements created on the spot, he has to draw the new article, eventually providing various graphic versions in different colours, fabric pattern or material.

Flow of the solution to the problem

In order to solve the above mentioned problem, the stylist has to carry out operations similar to the following:

I switching on the personal computer PC, the television monitor, the video disk reader, the camera, and eventually the codifier and decodifier. Said operation automatically starts the operating system also;

II initiating the software dBASE III on the PC; then, within it, initiating the program INFOSTYLE, which comprises all the non commercial software components (control program, interface to user, interface for driving the optical disk reader, reference files);

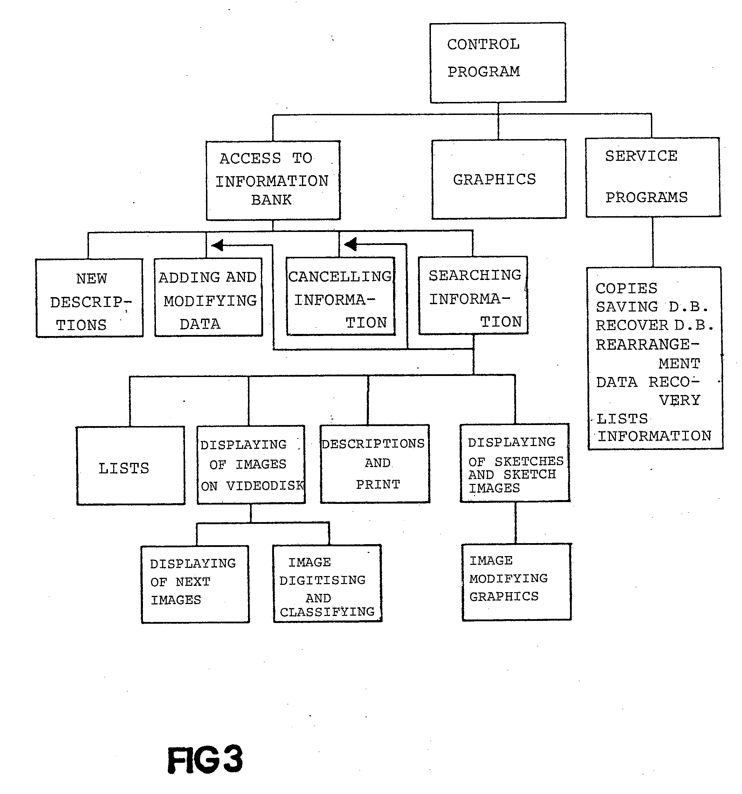

III the program provides a series of cascaded menus, on which the stylist selects the functions of interest to him at the moment (for the logic flow chart reference is made to figure 3). For this particular case the stylist will have to select the function of searching all the women's fashion collections (by restricting for instance to those not older than a given date), which somehow refer to Spain;

IV a complete list is obtained at this point of the fashion collections satisfying the specific requirements. Once the collection is selected, the stylist asks to see the jackets. The interface for driving the optical disk reader is then operated, which accedes to the historical images stored on the video disk and the stylest displays on the video screen the first one meeting the requirements (jacket for women of the collection previously selected);

V by means of selections operated on a menu, the stylist can drive the video disk reader passing from one image to that logically successive or preceding (i.e. he can see all the women's jackets of the selected collection);

VI once a satisfactory image has been found (if one is not found the stylist can carry out the same search on other collections of the list previously obtained), he can "capture" it by means of a menu selection and store it on a magnetic disk, in a digital, reprocessable format. This operation is carried out by the interface to the user coupled with the interface for the driver of the optical disk reader and that between the dBASE III and the TARGA 16 graphic board;

VII the image so captured and digitised automatically becomes a sketch and it is classified as such with the same characteristics as the original historical image (women's jacket in Spanish style);

VIII the preceding operations can be repeated for a search of fabric, colour, pattern, other articles of clothing to be associated with the jacket, background, etc., thus obtaining a set of digitised sketches;

IX in order to modify and combine the sketches thus obtained, it is necessary to get out of the interface for the optical disk driver and go back to the list of Spanish fashion collections. Then one has to ask to see the sketches thus digitised and, eventually, others previously existant concerning the same collections. To do this, the interface routines with the TARGA 16 graphic board 16 are recalled, again by selections operated on the menu, which display on the screen for example the first jacket found (the basic one on which the modifications are made);

X after confirmation by the stylist that the image on the screen is just that desired, the user interface recalls the graphic software TIPS.

Through this and through the digitising tablet it is possible to make modifications and compositions of various sketches until the desired product is obtained;

XI the same functions of image capturing described for the historical images on video disk can be carried out on images of the real world also, through a camera;

XII the final product (drawing of a women's jacket coloured in different ways, with a fabric of various textures and patterns, with different modifications, etc.) assembled with parts from the historical file on video disk, parts from real images taken by camera, parts obtained from previous drawings and parts created ex novo, can be printed by a colour printer and/or stored on a cartridge of the external magnetic unit; the latter can be removed to form an information bank owned by the stylist.

**Claims**

1. A computer aided working station for the design and, or processing of sketches for articles of clothing and the like, for combining a set of sketches and/or photograms and/or historical images on video disk and a set of alphanumerical data comprising the descriptions and references thereof, characterised in that it comprises in combination: an electronic processor (10) and, associated to said processor, a graphic video (11) for the video display of a new image, a graphic printer (13) for printing a new image, a digitizer tablet (14) for modifying an existing image, an optical disk player (16) with associated monitor (32) for reproducing an image from an optical disk file, a video tape recorder (62) for tape recording images, a camera (50) for enabling the introduction of new images on optical disk, said processor further comprising an external magnetic storage unit (51) and being provided with an operating system and a dedicated software, said software comprising: a control program (20) cooperating with a software (21) for data base management and a reference file (22) for extracting said images from said data base in accordance with the references, a graphic software for sketches (26) interacting with a sketch file (27) to enable the extracted images to be modified, and software modules for the management of a optical disk interface, image file, and video disk images, interacting in the picking up and storing of images.

2. Working station according to claim 1, in which said processor (10) communicates through a graphics board (30) and a codifier (28) with the monitor (32) and the tape recorder (62).

3. Working station according to claim 2, in which the images from said optical disk player (16) and camera (50) are transmitted to the processor (10) through a decodifier (31) and a graphics board (30).

4. Working station according to claim 1, characterised in that the software logic flow starts from a "control program" hierarchically associated with a module for "access to the information bank", a module for "graphics" and a module for "service programs"; the module for "access to the information bank" being associated with modules for "new descriptions", "adding and modifying data", "cancelling information", "searching information"; said module for "searching information" being associated with modules for "lists", "displaying image on video disk", "descriptions and print", "sketches and sketch image displaying"; said module for "displaying image on video disk" being associated to a module for "displaying of next images" and "image digitising and classifying"; said module for "displaying of sketches and sketch images" being associated with a module for "image modifying graphics"; and said module for "service programs" being associated with a composite module "copies - saving DB - recover   DB - rearrangement - data   recovery - lists - information".

0302843

FIG 1

0302843

FIG 2

0302843

```
                    ┌─────────────┐
                    │  CONTROL    │
                    │  PROGRAM    │
                    └──────┬──────┘
        ┌──────────────────┼──────────────────┐
  ┌─────┴──────┐    ┌───────┴─────┐    ┌───────┴──────┐
  │ ACCESS TO  │    │  GRAPHICS   │    │   SERVICE    │
  │INFORMATION │    │             │    │              │
  │   BANK     │    └─────────────┘    │  PROGRAMS    │
  └─────┬──────┘                       └───────┬──────┘
```

| NEW DESCRIP-TIONS | ADDING AND MODIFYING DATA | CANCELLING INFORMA-TION | SEARCHING INFORMA-TION |
|---|---|---|---|

| COPIES SAVING D.B. RECOVER D.B. REARRANGE-MENT DATA RECO-VERY LISTS INFORMATION |
|---|

| LISTS | DISPLAYING OF IMAGES ON VIDEODISK | DESCRIPTIONS AND PRINT | DISPLAYING OF SKETCHES AND SKETCH IMAGES |
|---|---|---|---|

| DISPLAYING OF NEXT IMAGES | IMAGE DIGITISING AND CLASSIFYING | IMAGE MODIFYING GRAPHICS |
|---|---|---|

# FIG 3